# EUROPEAN PATENT APPLICATION

(11) **EP 4 589 711 A1**
(43) Date of publication of application: **23.07.2025**
(21) Application number: 23865923.9
(22) Date of filing: 18.09.2023
(51) Int. Cl.: H01M 10/0562, C01B 25/14

(54) **SOLID ELECTROLYTE PREPARATION METHOD AND SOLID ELECTROLYTE**

(30) Priority: 16.09.2022 KR 20220117225; 16.09.2022 KR 20220117226
(71) Applicant: LG Chem, Ltd., Yeongdeungpo-gu Seoul 07336 (KR)
(72) Inventor: CHUNG, Ha Bin, Daejeon 34122 (KR); LEE, Dong Geon, Daejeon 34122 (KR); SON, Byoung Kuk, Daejeon 34122 (KR); PARK, Chang Hun, Daejeon 34122 (KR); KIM, In Gyu, Daejeon 34122 (KR); JEON, Do Yeon, Daejeon 34122 (KR); LEE, Seong Ho, Daejeon 34122 (KR); MIN, Sang Hyuk, Daejeon 34122 (KR)
(74) Representative: Plasseraud IP
(86) International application number: PCT/KR2023/014019
(87) International publication number: WO 2024/058629

(57) **Abstract**

The present invention relates to a method of preparing a sulfide-based solid electrolyte, which includes steps of (A) preparing a reaction mixture by grinding each of sulfide-based solid electrolyte raw materials and mixing the ground raw materials; (B) compressing the reaction mixture into a form of a pellet; and (C) preparing a sintered product by sintering the reaction mixture in the form of a pellet, and a sulfide-based solid electrolyte prepared thereby.

## Description

### TECHNICAL FIELD

### Cross-reference to Related Applications

This application claims priority from Korean Patent Application Nos. 10-2022-0117225, filed on September 16, 2022, and 10-2022-0117226, filed on September 16, 2022, the disclosures of which are incorporated by reference herein.

### Technical Field

The present invention relates to a method of preparing a sulfide-based solid electrolyte and a solid electrolyte prepared thereby.

### BACKGROUND ART

An all-solid-state battery is a battery which replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid-state battery is a material in a solid state which may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

The sulfide-based solid electrolyte is generally prepared by simply mixing raw materials and then heat-treating the mixture, wherein, in this case, since not only an unreacted product that does not react but also a side reaction product, i.e., impurities are present in the raw materials, there is a problem in that ionic conductivity of the sulfide-based solid electrolyte is reduced.

Particularly, in a case in which it deviates from a basic composition of Li₆PS₅Ha (Ha: chlorine (Cl), bromine (Br), iodine (I)), there is a problem in that a content of the impurities is further increased due to structural instability.

### DISCLOSURE OF THE INVENTION

### TECHNICAL PROBLEM

An aspect of the present invention provides a method of preparing a sulfide-based solid electrolyte, which improves reactivity of raw materials such that the resulting sulfide-based solid electrolyte includes almost no impurities, and a sulfide-based solid electrolyte prepared thereby.

### TECHNICAL SOLUTION

The present invention provides a method of preparing a sulfide-based solid electrolyte and a sulfide-based solid electrolyte.
(1) The present invention provides a method of preparing a sulfide-based solid electrolyte which includes steps of (A) preparing a reaction mixture by grinding each of sulfide-based solid electrolyte raw materials and mixing the ground raw materials; (B) compressing the reaction mixture into a form of a pellet; and (C) preparing a sintered product by sintering the reaction mixture in the form of a pellet.
(2) The present invention provides the method of (1) above, wherein the sulfide-based solid electrolyte raw material includes (i) a lithium-containing raw material, (ii) a phosphorus-containing raw material, (iii) a sulfur-containing raw material, and optionally (iv) at least one selected from a halogen-containing raw material, an M-containing raw material (M is at least one selected from silicon (Si) and germanium (Ge)), and an N-containing raw material (N is at least one selected from tin (Sn), antimony (Sb), aluminum (Al), gallium (Ga), zinc (Zn), zirconium (Zr), indium (In), and copper (Cu)).
(3) The present invention provides the method of (1) or (2) above, wherein the grinding of the step (A) is ball mill grinding which is performed using two or more types of balls with different diameters.
(4) The present invention provides the method of (3) above, wherein, during the grinding of the step (A), the diameters of the balls are 1 mm, 3 mm, or 5 mm.
(5) The present invention provides the method of any one of (1) to (4) above, wherein the grinding of the step (A) is performed at a rotation speed of 500 rpm to 800 rpm.
(6) The present invention provides the method of any one of (1) to (5) above, wherein the mixing of the step (A) is ball mill mixing which is performed using two or more types of balls with different diameters.
(7) The present invention provides the method of (6) above, wherein, during the mixing of the step (A), the diameters of the balls are 1 mm, 3 mm, 5 mm, or 10 mm.
(8) The present invention provides the method of any one of (1) to (7) above, wherein the mixing of the step (A) is performed at a rotation speed of 200 rpm to 500 rpm.
(9) The present invention provides the method of any one of (2) to (8) above, wherein (iv) the halogen-containing raw material includes a chlorine-containing raw material and a bromine-containing raw material, and a ratio of the number of moles of halogen to the total number of moles of phosphorus, M, and N contained in the reaction mixture is in a range of 1.1 to 1.5.
(10) The present invention provides the method of any one of (1) to (9) above, wherein, during the preparing of the reaction mixture, a non-reactive solvent having a relative polarity to water of 0 to 0.15 is further mixed.
(11) The present invention provides the method of (10) above, wherein the non-reactive solvent is mixed in an amount of 2.5 wt% to 5.0 wt% based on a total amount of the sulfide-based solid electrolyte raw materials.
(12) The present invention provides the method of any one of (1) to (11) above, wherein the compressing of the step (B) is performed at a pressure of 50 MPa to 400 MPa.
(13) The present invention provides the method of any one of (1) to (12) above, wherein the sintering is performed at a temperature of 350°C to 600°C.
(14) The present invention provides the method of any one of (1) to (13) above, wherein the method further includes a step of (D) grinding the sintered product.
(15) The present invention provides the method of (14) above, wherein the grinding of the step (D) includes mortar grinding the sintered product and ball mill grinding the mortar ground sintered product using two or more types of balls with different diameters.
(16) The present invention provides the method of (15) above, wherein, during the grinding of the step (D), the diameters of the balls are 1 mm, 3 mm, 5 mm, or 10 mm.
(17) The present invention provides the method of any one of (14) to (16) above, wherein the grinding of the step (D) is performed at a rotation speed of 100 rpm to 500 rpm.
(18) The present invention provides a sulfide-based solid electrolyte having a composition represented by Formula 1 and having a total impurity content of 3 wt% or less.

   [Formula 1] Li_{7-(x+y)+((a× (5-p) )+ (b× (5-q)))}P_{1-(a+b)}MₐN_{b}S_{6-(x+y)}ClₓBr_{y}

   In Formula 1,
   M is at least one selected from silicon (Si) and germanium (Ge),
   N is at least one selected from tin (Sn), antimony (Sb), aluminum (Al), gallium (Ga), zinc (Zn), zirconium (Zr), indium (In), and copper (Cu),
   p is an oxidation number of M, and q is an oxidation number of N, and
   0.1≤x≤1.4, 0.1≤y≤1.4, 1.1<x+y≤1.5, 0≤a≤0.5, and 0≤b≤0.2.
(19) The present invention provides the sulfide-based solid electrolyte of (18) above, wherein the sulfide-based solid electrolyte has an ionic conductivity of 4.0 mS/cm or more.
(20) The present invention provides the sulfide-based solid electrolyte of (18) or (19) above, wherein the sulfide-based solid electrolyte has an electronic conductivity of 1.0×10⁻⁹ mS/cm to 1.0×10⁻⁴ mS/cm.
(21) The present invention provides the sulfide-based solid electrolyte of any one of (18) to (20) above, wherein the sulfide-based solid electrolyte has an average particle diameter (D₅₀) of 1.0 µm to 5.0 µm.

### ADVANTAGEOUS EFFECTS

With respect to a method of preparing a sulfide-based solid electrolyte according to the present invention, it may not only prevent adhesion of raw materials, but may also improve reactivity of the raw materials by preparing a reaction mixture by pre-grinding each of the raw materials and then mixing them, compressing the reaction mixture into a form of a pellet and then sintering the reaction mixture in the form of a pellet.

Accordingly, with respect to a sulfide-based solid electrolyte prepared according to the method of preparing a sulfide-based solid electrolyte according to the present invention, since there are almost no impurities, there is an advantage of excellent physical properties such as ionic conductivity.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In this specification, 'Dₙ' denotes a particle diameter at n% of cumulative distribution of volume according to the particle diameter. That is, D₅₀ is a particle diameter at 50% of the cumulative distribution of volume according to the particle diameter, D₉₀ is a particle diameter at 90% of the cumulative distribution of volume according to the particle diameter, and D₁₀ is a particle diameter at 10% of the cumulative distribution of volume according to the particle diameter. The Dₙ may be measured by using a laser diffraction method. Specifically, after dispersing measurement target powder in a dispersion medium (xylene), the dispersion medium is introduced into a commercial laser diffraction particle size measurement instrument (e.g., Mastersizer 3000 by Malvern Panalytical Ltd.) and a particle size distribution is calculated by measuring a difference in diffraction patterns due to a particle size when particles pass through a laser beam. The D₁₀, D₅₀, and D₉₀ may be measured by calculating particle diameters at 10%, 50%, and 90% of the cumulative distribution of volume according to the particle diameter using the measurement instrument.

In this specification, relative polarity of a solvent to water means polarity of the solvent when polarity of water is 1. For example, relative polarity of xylene to water is 0.074, relative polarity of toluene to water is 0.099, and relative polarity of hexane to water is 0.009.

The expression 'All Solid State Battery' used in this specification means a battery in which all components of the battery are solid, wherein it is distinguished from a liquid electrolyte secondary battery using a liquid electrolyte, such as an electrolyte solution, and a gel polymer secondary battery using a liquid electrolyte together while using a polymer electrolyte instead of a separator.

### Method of Preparing Sulfide-based Solid Electrolyte

A method of preparing a sulfide-based solid electrolyte according to the present invention includes the steps of (A) preparing a reaction mixture by grinding each of sulfide-based solid electrolyte raw materials and mixing the ground raw materials; (B) compressing the reaction mixture into a form of a pellet; and (C) preparing a sintered product by sintering the reaction mixture in the form of a pellet.

The method of preparing a sulfide-based solid electrolyte according to the present invention may further include a step of (D) grinding the sintered product.

Hereinafter, each step of the method of preparing a sulfide-based solid electrolyte according to the present invention will be described.

### Step (A)

Step (A) is a step of preparing a reaction mixture by each independently grinding sulfide-based solid electrolyte raw materials and then mixing them.

According to the present invention, the sulfide-based solid electrolyte raw material may include (i) a lithium-containing raw material, (ii) a phosphorus-containing raw material, (iii) a sulfur-containing raw material, and optionally (iv) at least one selected from a halogen-containing raw material, an M-containing raw material (M is at least one selected from silicon (Si) and germanium (Ge)), and an N-containing raw material (N is at least one selected from tin (Sn), antimony (Sb), aluminum (Al), gallium (Ga), zinc (Zn), zirconium (Zr), indium (In), and copper (Cu)). Specifically, the sulfide-based solid electrolyte raw material may be (i) a lithium-containing raw material, (ii) a phosphorus-containing raw material, (iii) a sulfur-containing raw material, and optionally (iv) at least one selected from a halogen-containing raw material, an M-containing raw material (M is at least one selected from Si and Ge), and an N-containing raw material (N is at least one selected from Sn, Sb, Al, Ga, Zn, Zr, In, and Cu).

Step (A) may specifically be a step of preparing a reaction mixture by each independently ball mill grinding (i) the lithium-containing raw material, (ii) the phosphorus-containing raw material, (iii) the sulfur-containing raw material, and optionally (iv) at least one selected from the halogen-containing raw material, the M-containing raw material (M is at least one selected from Si and Ge), and the N-containing raw material (N is at least one selected from Sn, Sb, Al, Ga, Zn, Zr, In, and Cu) using planetary ball mill equipment and then mixing them. For example, before mixing Li₂S, P₂S₅, and, optionally, at least one selected from LiCl, LiBr, SiS₂, and SnS₂, each may be first ground using zirconia balls and then mixed to prepare a reaction mixture. In this case, a surface area of the raw material may be increased to improve reactivity, and there may be almost no impurities in the resulting sulfide-based solid electrolyte. In a case in which a sulfide-based solid electrolyte is prepared after mixing each raw material without first grinding it, the raw materials may adhere while being mixed non-uniformly, and there is a problem in that a high content of impurities remains because partial non-uniformity of composition occurs. That is, since some raw materials cause adhesion, particle sizes of the raw materials may be adjusted to be small and the reactivity may be improved in a case in which each raw material is first ground and then mixed, rather than a case where the raw materials used in preparation of the solid electrolyte are mixed without grinding.

As a reference, when mixing the raw materials in a preparation process of the sulfide-based solid electrolyte, since a sulfur-containing raw material adheres to a wall of a grinder (e.g., ball mill container), an adhesion phenomenon occurs and impurities are formed, and thus, there is a problem in that ionic conductivity may be reduced due to sulfur deficiency, wherein, in the present invention, as described above, the adhesion phenomenon may be efficiently suppressed by pre-grinding the raw materials and then mixing them, and the ionic conductivity of the resulting solid electrolyte may also be improved.

According to the present invention, (i) the lithium-containing raw material may be Li₂S, Li₂S₂, Li₂S₄, Li₂S₆, LiCl, LiBr, Li, Li₃PS₄, LiOH, Li₂CO₃, or a combination thereof, but is not limited thereto. (i) the lithium-containing raw material may be mixed in an amount such that the resulting sulfide-based solid electrolyte has a composition represented by Formula 1 described herein.

According to the present invention, (ii) the phosphorus-containing raw material may be P₂S₅, Li₃PS₄, or a combination thereof, but is not limited thereto. (ii) the phosphorus-containing raw material may be mixed in an amount such that the resulting sulfide-based solid electrolyte has the composition represented by Formula 1 described herein.

According to the present invention, (iii) the sulfur-containing raw material may be Li₂S, Li₂S₂, Li₂S₄, Li₂S₆, S₈, P₂S₅, Li₃PS₄, or a combination thereof, but is not limited thereto. (iii) the sulfur-containing raw material may be mixed in an amount such that the resulting sulfide-based solid electrolyte has the composition represented by Formula 1 described herein.

According to the present invention, the halogen-containing raw material may be LiCl (chlorine-containing raw material), LiBr (bromine-containing raw material), or a combination thereof, but is not limited thereto. The halogen-containing raw material may be mixed in an amount such that the resulting sulfide-based solid electrolyte has the composition represented by Formula 1 described herein.

According to the present invention, the M-containing raw material (M is at least one selected from Si and Ge) may be SiS₂, SiCl₄, SiBr₄, Li_{3.75}Si, Si₃P₄, GeS₂, GeCl₄, GeBr₄, Li_{3.75}Ge, Ge₃P₄, or a combination thereof, but is not limited thereto. The M-containing raw material may be mixed in an amount such that the resulting sulfide-based solid electrolyte has the composition represented by Formula 1 described herein.

According to the present invention, the N-containing raw material (N is at least one selected from Sn, Sb, Al, Ga, Zn, Zr, In, and Cu) may be NS_{q/2}, NBr_{q}, NCl_{q}, N_{3/qP}, NP, or a combination thereof (q is an oxidation number of N). Specifically, the N-containing raw material may be SnS₂, SnCl₄, SnBr₄, Sn_{3/4}P, SbS_{2.5}, SbCl₅, SbBr₅, SbP, AlS_{1.5}, AlCl₃, AlBr₃, AlP, GaS_{1.5}, GaCl₃, GaBr₃, GaP, ZnS, ZnCl₂, ZnBr₂, Zn_{1.5}P, ZrS₂, ZrCl₄, ZrBr₄, ZrP, InS_{1.5}, InCl₃, InBr₃, InP, CuS, CuCl₂, CuBr₂, Cu_{1.5}P, but is not limited thereto. The N-containing raw material may be mixed in an amount such that the resulting sulfide-based solid electrolyte has the composition represented by Formula 1 described herein.

In a case in which the reaction mixture includes the M-containing raw material (M is at least one selected from Si and Ge) and the N-containing raw material (N is at least one selected from Sn, Sb, Al, Ga, Zn, Zr, In, and Cu), since the resulting sulfide-based solid electrolyte is doped with M and N, ionic conductivity and moisture stability may be further improved.

According to the present invention, the grinding of step (A) may be ball mill grinding which is performed using two or more types of balls with different diameters. In a case in which the grinding is performed using the two or more types of balls with different diameters, all particles may be uniformly ground into fine powder. A material of the ball may be the same material as the ball mill container, and, for example, may be zirconia, stainless steel, tungsten carbide, or silicon nitride.

According to the present invention, in the case that the grinding of step (A) is performed using the two or more types of balls with different diameters, the diameters of the balls may be 1 mm, 3 mm, or 5 mm. Energy applied to the particles is determined by the diameter of the ball, wherein, in a case in which the diameters of the balls used in the grinding of step (A) are 1 mm, 3 mm, or 5 mm, all particles may be ground uniformly without exception. That is, the ball with a relatively larger diameter may grind large particles due to relatively higher energy, and the ball with a relatively smaller diameter may further reduce the particle sizes of the raw materials.

For example, the grinding of step (A) may be performed using two or more types of zirconia balls with different diameters, and, more specifically, the grinding of step (A) may be performed using zirconia balls with a diameter of 1 mm and zirconia balls with a diameter of 3 mm such that an average particle diameter (D₅₀) of the raw materials is 1 µm or less.

According to the present invention, the grinding of step (A) may be performed at a rotation speed of 500 rpm to 800 rpm. Specifically, the grinding of step (A) may be performed at a rotation speed of 500 rpm or more, 510 rpm or more, 520 rpm or more, 530 rpm or more, 540 rpm or more, 550 rpm or more, 560 rpm or more, 570 rpm or more, 580 rpm or more, 590 rpm or more, or 600 rpm or more, and 700 rpm or less, 710 rpm or less, 720 rpm or less, 730 rpm or less, 740 rpm or less, 750 rpm or less, 760 rpm or less, 770 rpm or less, 780 rpm or less, 790 rpm or less, or 800 rpm or less. In this case, since the rotation speed above a certain level is secured, the grinding of the raw materials with the balls is easy, and thus, the size of each of the raw materials may be effectively reduced. The grinding of step (A) is grinding each of the raw materials separately, wherein it is preferably performed at a higher rotation speed using the balls with a smaller particle diameter than the mixing of step (A) in which the raw materials are mixed.

The mixing of step (A) may be ball mill mixing which is performed using two or more types of balls with different diameters. In this case, the raw materials may be mixed more uniformly. A material of the ball may be the same material as the ball mill container, and, for example, may be zirconia, stainless steel, tungsten carbide, or silicon nitride.

According to the present invention, in the case that the mixing of step (A) is performed using the two or more types of balls with different diameters, the diameters of the balls may be 1 mm, 3 mm, 5 mm, or 10 mm. Even if pre-grinding is performed, additional grinding occurs together during the mixing, wherein, since the raw material with a large particle size, among the raw materials to be mixed, is mainly ground by the large-diameter balls and the raw material with a small particle size is mainly ground by the small-diameter balls, there is an advantage in that the resulting particle size becomes uniform and mixing is also well achieved.

For example, the mixing of step (A) may be performed using two or more types of zirconia balls with different diameters, and, more specifically, the mixing of step (A) may be performed using zirconia balls with a diameter of 3 mm and zirconia balls with a diameter of 5 mm.

According to the present invention, the mixing of step (A) may be performed at a rotation speed of 200 rpm to 500 rpm. Specifically, the mixing of step (A) may be performed at a rotation speed of 200 rpm or more, 210 rpm or more, 220 rpm or more, 230 rpm or more, 240 rpm or more, or 250 rpm or more, and 450 rpm or less, 460 rpm or less, 470 rpm or less, 480 rpm or less, 490 rpm or less, or 500 rpm or less. Since the mixing of step (A) is a process of remixing each of the ground raw materials, it is preferable to perform the mixing at a lower rotation speed than the grinding of step (A), and, in a case in which the mixing is performed at a rotation speed in the above range, mixing time may be shortened.

According to the present invention, the halogen-containing raw material includes a chlorine-containing raw material and a bromine-containing raw material, and a ratio of the number of moles of halogen to the total number of moles of phosphorus, M, and N contained in the reaction mixture may be in a range of 1.1 to 1.5. The ratio of the number of moles of halogen to the total number of moles of phosphorus, M, and N contained in the reaction mixture may specifically be 1.10 or more, 1.15 or more, 1.20 or more, 1.25 or more, 1.30 or more, or 1.40 or more, and may be 1.50 or less. In this case, since a degree of delocalization of sulfur ions and halogen ions is increased, empty space at sites where lithium ions may be located is increased to facilitate lithium ion conduction, and thus, it has an advantage of high ionic conductivity.

According to the present invention, during the preparing of the reaction mixture, a non-reactive solvent having a relative polarity to water of 0 to 0.15 may be further mixed. In this case, the non-reactive solvent may be mixed in an amount of 2.5 wt% to 5.0 wt% based on a total amount of the sulfide-based solid electrolyte raw materials (for example, (i) the lithium-containing raw material, (ii) the phosphorus-containing raw material, (iii) the sulfur-containing raw material, and optionally (iv) at least one selected from the halogen-containing raw material, the M-containing raw material (M is at least one selected from Si and Ge), and the N-containing raw material (N is at least one selected from Sn, Sb, Al, Ga, Zn, Zr, In, and Cu)). That is, step (A) may be a step of preparing the reaction mixture by mixing the sulfide-based solid electrolyte raw materials with a trace amount of the non-reactive solvent.

Since the sulfide-based solid electrolyte raw materials (for example, (i) the lithium-containing raw material, (ii) the phosphorus-containing raw material, (iii) the sulfur-containing raw material, and optionally (iv) the halogen-containing raw material and the M-containing raw material (M is at least one selected from Si and Ge)) are highly reactive to moisture, they may generate hydrogen sulfide, a harmful gas, when exposed to the air during the sulfide-based solid electrolyte preparation process, wherein the method of preparing a sulfide-based solid electrolyte according to the present invention may prevent the exposure of the raw materials to the air by further mixing the non-reactive solvent.

The non-reactive solvent may have a relative polarity to water of 0 to 0.15, specifically, 0 or more, and 0.13 or less, 0.135 or less, 0.14 or less, 0.145 or less, or 0.15 or less in order to prevent the exposure of the raw materials to the air and to not have a chemical effect on the raw materials at the same time. In a case in which the relative polarity of the non-reactive solvent to water is greater than 0.15, a side reaction may occur between the solvent and the raw materials.

The non-reactive solvent, for example, may be at least one selected from xylene, benzene, toluene, pentane, hexane, cyclohexane, and heptane, but is not limited thereto.

According to the present invention, the non-reactive solvent may be mixed in an amount of 2.5 wt% to 5.0 wt% based on the total amount of the sulfide-based solid electrolyte raw materials. Specifically, the non-reactive solvent may be mixed in an amount of 2.5 wt% or more, 2.6 wt% or more, 2.7 wt% or more, 2.8 wt%, 2.9 wt% or more, or 3.0 wt% or more, and 4.0 wt% or less, 4.1 wt% or less, 4.2 wt% or less, 4.3 wt% or less, 4.4 wt% or less, 4.5 wt% or less, 4.6 wt% or less, 4.7 wt% or less, 4.8 wt% or less, 4.9 wt% or less, or 5.0 wt% or less based on the total amount of the raw materials. In this case, the exposure of the raw materials to the air may not only be prevented, but the adhesion of the raw materials, which may occur during the sulfide-based solid electrolyte preparation process, may also be prevented. It is desirable that the solid electrolyte has characteristics of low electronic conductivity and high ionic conductivity, wherein, in a case in which the non-reactive solvent is mixed in an amount of greater than 5.0 wt% based on the total amount of the raw materials, since a remaining amount of carbon generated from the non-reactive solvent is increased and the electronic conductivity of the solid electrolyte after a drying process and a sintering process is increased due to the remaining amount of the carbon, a problem in the role of the solid electrolyte, which only requires ionic conduction, may occur.

In the present invention, as described above, the adhesion phenomenon may be efficiently suppressed by adding and mixing a trace amount of the non-reactive solvent together, and the ionic conductivity of the resulting solid electrolyte may be improved.

The reaction mixture prepared through step (A) may be a reaction mixture in a form of powder in which the raw materials and the non-reactive solvent are uniformly mixed. Although the reaction mixture includes the non-reactive solvent, it includes only a trace amount, and thus, the reaction mixture may be in the form of powder rather than in the form of a slurry. Thus, the mixing of step (A) may be considered as dry mixing rather than wet mixing.

Before performing a process of processing the reaction mixture into the form of a pellet, a step of drying the reaction mixture in the form of powder may be further performed. This is to remove the non-reactive solvent remaining in the uniformly mixed reaction mixture, wherein vacuum drying, heat drying, or heat drying under vacuum conditions may be performed at room temperature to 200°C or less for 1 minute to 10 hours. Specifically, vacuum drying may be performed at a temperature of 80°C for 1 hour using a vacuum oven.

### Step (B)

Step (B) is a step of compressing the reaction mixture into a form of a pellet. For example, the reaction mixture may be pelletized by being compressed with a press. In this case, since the raw materials included in the reaction mixture are densified to increase a contact area between the particles, there is an advantage in that the reactivity between the raw materials is improved.

According to the present invention, the compressing of step (B) may be performed at a pressure of 50 MPa to 400 MPa. Specifically, the compressing may be performed at a pressure of 50 MPa or more, 55 MPa or more, 60 MPa or more, 65 MPa or more, 70 MPa or more, 75 MPa or more, 80 MPa or more, 85 MPa or more, 90 MPa or more, 95 MPa or more, or 100 MPa or more, and 200 MPa or less, 210 MPa or less, 220 MPa or less, 230 MPa or less, 240 MPa or less, 250 MPa or less, 260 MPa or less, 270 MPa or less, 280 MPa or less, 290 MPa or less, 300 MPa or less, 310 MPa or less, 320 MPa or less, 330 MPa or less, 340 MPa or less, 350 MPa or less, 360 MPa or less, 370 MPa or less, 380 MPa or less, 390 MPa or less, or 400 MPa or less. In this case, since a shape of the pellet is maintained well even after the pellet is removed from the mold, a more uniform product may be obtained.

### Step (C)

Step (C) is a step of sintering the reaction mixture in the form of a pellet.

According to the present invention, the sintering may be performed in an inert atmosphere to prevent occurrence of side reactions with oxygen and moisture. For example, the sintering may be performed in an argon atmosphere, a nitrogen atmosphere, or a helium atmosphere.

According to the present invention, the sintering may be performed at a temperature of 350°C to 600°C. More specifically, the sintering temperature may be 350°C or higher, 360°C or higher, 370°C or higher, 380°C or higher, 390°C or higher, 400°C or higher, 410°C or higher, 420°C or higher, 430°C or higher, 440°C or higher, or 450°C or higher, and 550°C or less, 560°C or less, 570°C or less, 580°C or less, 590°C or less, or 600°C or less. In a case in which the sintering temperature is within the above range, an argyrodite-type crystal structure may be formed.

Temperature holding time of the sintering may be in a range of 1 hour to 24 hours. In this case, reaction energy is sufficient to reduce a content of the impurities, partial decomposition of a crystal phase of the argyrodite-type structure at high temperatures may be prevented, and an excessive increase in particle size of the sulfide-based solid electrolyte powder may be prevented.

In a case in which the reaction mixture includes the M-containing raw material and the N-containing raw material, the sintering temperature may preferably be 400°C or higher, 405°C or higher, 410°C or higher, 415°C or higher, or 420°C or higher, and may be 480°C or less, 485°C or less, 490°C or less, 495°C or less, or 500°C or less. In a case in which P-site ion doping is performed on an argyrodite composition, the sintering temperature may be affected, formation of the impurities may be further reduced within the above range, and performance, such as ionic conductivity, of the prepared solid electrolyte may be excellent.

### Step (D)

The method of preparing a sulfide-based solid electrolyte according to the present invention may further include a step of (D) grinding the sintered product.

Step (D) is a step of controlling the particle size by grinding the sintered product subjected to step (C). The sintered pellet may be ground by hand grinding using a mortar (mortar grinding), and may be ground using planetary ball mill equipment.

According to the present invention, the grinding of step (D) may be ball mill grinding which is performed using two or more types of balls with different diameters. In a case in which the grinding is performed using the two or more types of balls with different diameters, all particles may be uniformly ground into fine powder. A material of the ball may be the same material as the ball mill container, and, for example, may be zirconia, stainless steel, tungsten carbide, or silicon nitride.

According to the present invention, in the case that the grinding of step (D) is performed using the two or more types of balls with different diameters, the diameters of the balls may be 1 mm, 3 mm, or 5 mm. Energy applied to the particles is determined by the diameter of the ball, wherein, in a case in which the diameters of the balls used in the grinding of step (D) is 1 mm, 3 mm, or 5 mm, particles may be ground uniformly. That is, the ball with a relatively larger diameter may grind large particles due to relatively higher energy, and the ball with a relatively smaller diameter may further reduce the particle sizes of the raw materials.

For example, the grinding of step (D) may be performed using two or more types of zirconia balls with different diameters, and, more specifically, the grinding of step (D) may be performed using zirconia balls with a diameter of 1 mm and zirconia balls with a diameter of 3 mm such that an average particle diameter (D₅₀) of the resulting solid electrolyte is in a range of 1.0 µm to 5.0 µm.

According to the present invention, the grinding of step (D) may be performed at a rotation speed of 100 rpm to 500 rpm. Specifically, the grinding of step (D) may be performed at a rotation speed of 100 rpm or more, 110 rpm or more, 120 rpm or more, 130 rpm or more, 140 rpm or more, 150 rpm or more, 160 rpm or more, 170 rpm or more, 180 rpm or more, 190 rpm or more, or 200 rpm or more, and 400 rpm or less, 410 rpm or less, 420 rpm or less, 430 rpm or less, 440 rpm or less, 450 rpm or less, 460 rpm or less, 470 rpm or less, 480 rpm or less, 490 rpm or less, or 500 rpm or less. In this case, since grinding energy is appropriately adjusted, a solid electrolyte having a desired particle diameter may not only be prepared, but decomposition of the solid electrolyte may also be prevented.

According to the present invention, the resulting sulfide-based solid electrolyte may have an argyrodite-type crystal structure in terms of high ionic conductivity and low reactivity with a lithium negative electrode. That the sulfide-based solid electrolyte has an argyrodite-type crystal structure means that the sulfide-based solid electrolyte has at least a crystal phase of an argyrodite-type structure as a main phase. In this case, the main phase refers to a phase with the largest ratio to a total amount of all crystal phases constituting the sulfide solid electrolyte. Thus, a content ratio of the crystal phase of the argyrodite-type structure included in the sulfide-based solid electrolyte is preferably 90 wt% or more and may more preferably be 92 wt% or more, 95 wt% or more, and 97 wt% or more based on total crystal phases constituting the sulfide-based solid electrolyte.

Also, according to the present invention, the resulting sulfide-based solid electrolyte may have a composition represented by Formula 1 below.

[Formula 1] Li_{7-(x+y)+((a× (5-p))+}(_{b× (5-q)))}P₁-_{(a+b)}MₐN_{b}S₆-_{(x+y)}ClₓBr_{y}

In Formula 1,
M is at least one selected from Si and Ge,
N is at least one selected from Sn, Sb, Al, Ga, Zn, Zr, In, and Cu,
p is an oxidation number of M, and q is an oxidation number of N, and
0.1≤x≤1.4, 0.1≤y≤1.4, 1.1<x+y≤1.5, 0≤a≤0.5, and 0≤b≤0.2.

### Sulfide-based Solid Electrolyte

The present invention provides a sulfide-based solid electrolyte having a composition represented by the following Formula 1 and having a total impurity content of 3 wt% or less. The sulfide-based solid electrolyte according to the present invention may be prepared according to the above-described method of preparing a sulfide-based solid electrolyte, and, accordingly, the total impurity content may be small.

[Formula 1] Li_{7-(x+y)+((a×(5-p))+(b×(5-q))))}P₁-_{(a+b)}MₐN_{b}S₆-_{(x+y)}ClₓBr_{y}

In Formula 1,
M is at least one selected from Si and Ge,
N is at least one selected from Sn, Sb, Al, Ga, Zn, Zr, In, and Cu,
p is an oxidation number of M, and q is an oxidation number of N, and
0.1≤x≤1.4, 0.1≤y≤1.4, 1.1<x+y≤1.5, 0≤a≤0.5, and 0≤b≤0.2.

According to the present invention, the sulfide-based solid electrolyte may have an argyrodite-type crystal structure. In this case, there are advantages in terms of high ionic conductivity, stability in contact with lithium, and reproducibility of synthesis.

According to the present invention, the impurities may include both an unreacted product that did not react and a side reaction product when the sulfide-based solid electrolyte is prepared, wherein the impurities may specifically be Li₂S, LiCl, LiBr, and Li₄SiS₄. That is, the total impurity content may be a total content of Li₂S, LiCl, LiBr, and Li₄SiS₄ which remain in the sulfide-based solid electrolyte. The impurity content may be obtained by analyzing X-ray diffraction (XRD) data of the sulfide-based solid electrolyte powder using a Rietveld refinement program, but the present invention is not limited thereto.

In a case in which the sulfide-based solid electrolyte according to the present invention has the composition represented by Formula 1, there is an advantage in that the ionic conductivity is increased while distribution of lithium (Li) is affected due to chlorine (Cl) and bromine (Br) having a high degree of disorder.

According to the present invention, in a case in which the sulfide-based solid electrolyte is doped with M, that is, in a case in which a is greater than 0 in Formula 1, an amount of Li present in the solid electrolyte is increased, and there is an advantage in that the ionic conductivity is improved due to the fact that a microstructure expands and asymmetry is increased. In addition, in a case in which the sulfide-based solid electrolyte is doped with N, that is, in a case in which b is greater than 0 in Formula 1, since a stronger bond with sulfur (S) is formed, loss of S due to moisture, collapse of the structure, and the resulting degradation in performance and stability may be reduced.

According to the present invention, x may be 0.10 or more, 0.15 or more, 0.20 or more, 0.25 or more, 0.30 or more, 0.35 or more, or 0.40 or more, and may be 1.0 or less, 1.05 or less, 1.10 or less, 1.15 or less, 1.20 or less, 1.25 or less, 1.30 or less, 1.35 or less, or 1.40 or less.

According to the present invention, y may be 0.1 or more, 0.15 or more, 0.20 or more, 0.25 or more, 0.30 or more, 0.35 or more, 0.40 or more, 0.45 or more, or 0.50 or more, and may be 1.0 or less, 1.05 or less, 1.10 or less, 1.15 or less, 1.20 or less, 1.25 or less, 1.30 or less, 1.35 or less, or 1.40 or less.

According to the present invention, x+y may be 1.10 or more, 1.15 or more, 1.20 or more, 1.25 or more, 1.30 or more, 1.35 or more, or 1.40 or more, and may be 1.50 or less.

According to the present invention, a may be 0 or more, and may be 0.20 or less, 0.25 or less, 0.30 or less, 0.35 or less, 0.40 or less, 0.45 or less, or 0.50 or less.

According to the present invention, b may be 0 or more, and may be 0.05 or less, 0.10 or less, 0.15 or less, or 0.20 or less.

According to the present invention, Formula 1 may be Formula 2 or Formula 3 below.

[Formula 2] Li_{7-(x2+y2)}PS₆-_{(x2+y2)}Clₓ₂Br_{y2}

In Formula 2,
0.1≤x2≤1.4, 0.1≤y2≤1.4, and 1.1<x2+y2≤1.5.

[Formula 3] Li_{7-(x3+y3)+((a3×(5-p')))+(b3× (5-q')))}P₁-_{(a3+b3)}Mₐ₃N_{b3}S₆-_{(x3+y3)}Clₓ₃Bry₃

In Formula 1,
M is at least one selected from Si and Ge,
N is at least one selected from Sn, Sb, Al, Ga, Zn, Zr, In, and Cu,
P' is an oxidation number of M, and q' is an oxidation number of N, and
0.1≤x3≤1.4, 0.1≤y3≤1.4, 1.1<x3+y3≤1.5, 0<a3≤0.5, and 0<b3≤0.2.

According to the present invention, x2 and x3 may each independently be 0.10 or more, 0.15 or more, 0.20 or more, 0.25 or more, 0.30 or more, 0.35 or more, or 0.40 or more, and may be 1.0 or less, 1.05 or less, 1.10 or less, 1.15 or less, 1.20 or less, 1.25 or less, 1.30 or less, 1.35 or less, or 1.40 or less.

According to the present invention, y2 and y may each independently be 0.1 or more, 0.15 or more, 0.20 or more, 0.25 or more, 0.30 or more, 0.35 or more, 0.40 or more, 0.45 or more, or 0.50 or more, and may be 1.0 or less, 1.05 or less, 1.10 or less, 1.15 or less, 1.20 or less, 1.25 or less, 1.30 or less, 1.35 or less, or 1.40 or less.

According to the present invention, x2+y2 and x3+y3 may each independently be 1.10 or more, 1.15 or more, 1.20 or more, 1.25 or more, 1.30 or more, 1.35 or more, or 1.40 or more, and may be 1.50 or less.

According to the present invention, a3 may be greater than 0, 0.05 or more, 0.10 or more, or 0.15 or more, and may be 0.25 or less, 0.30 or less, 0.35 or less, 0.40 or less, 0.45 or less, or 0.50 or less.

According to the present invention, b3 may be greater than 0, 0.01 or more, 0.02 or more, or 0.03 or more, and may be 0.07 or less, 0.08 or less, 0.09 or less, 0.10 or less, 0.15 or less, or 0.20 or less.

The present invention provides a sulfide-based solid electrolyte having a composition represented by the following Formula 1 and having a total impurity content of 3 wt% or less. The sulfide-based solid electrolyte according to the present invention may be prepared according to the above-described method of preparing a sulfide-based solid electrolyte, and, accordingly, the total impurity content may be small.

In a case in which the sulfide-based solid electrolyte according to the present invention has the composition represented by Formula 2, a total content of impurities may be 3 wt% or less, specifically, 2 wt% or less. In addition, in a case in which the sulfide-based solid electrolyte according to the present invention has the composition represented by Formula 3, a total content of impurities may be 3 wt% or less.

According to the present invention, the sulfide-based solid electrolyte may have an ionic conductivity of 4.0 mS/cm or more. The ionic conductivity of the sulfide-based solid electrolyte may specifically be 4.0 mS/cm or more, 4.1 mS/cm or more, 4.2 mS/cm or more, 4.3 mS/cm or more, 4.4 mS/cm or more, 4.5 mS/cm or more, 4.6 mS/cm or more, 4.7 mS/cm or more, 4.8 mS/cm or more, 4.9 mS/cm or more, 5.0 mS/cm or more, 5.1 mS/cm or more, 5.2 mS/cm or more, 5.3 mS/cm or more, 5.4 mS/cm or more, 5.5 mS/cm or more, 5.6 mS/cm or more, 5.7 mS/cm or more, 5.8 mS/cm or more, 5.9 mS/cm or more, or 6.0 mS/cm or more. The ionic conductivity may be ionic conductivity when the average particle diameter (D₅₀) of the sulfide-based solid electrolyte is in a range of 1.0 µm to 5.0 µm. The higher the ionic conductivity is, the better it is, but an upper limit of the ionic conductivity of the sulfide-based solid electrolyte according to the present invention may be 8.0 mS/cm or less, 8.5 mS/cm or less, 9.0 mS/cm or less, 9.5 mS/cm or less, or 10.0 mS/cm or less.

In the case that the sulfide-based solid electrolyte according to the present invention has the composition represented by Formula 2, ionic conductivity of the solid electrolyte may be 4.0 mS/cm or more, specifically, 5.0 mS/cm or more, or 6.0 mS/cm or more. In addition, in the case that the sulfide-based solid electrolyte according to the present invention has the composition represented by Formula 3, ionic conductivity of the solid electrolyte may be 4.0 mS/cm or more, specifically, 5.0 mS/cm or more, 6.0 mS/cm or more, or 6.5 mS/cm or more.

According to the present invention, the sulfide-based solid electrolyte may have an electronic conductivity of 1.0×10⁻⁹ mS/cm to 1.0×10⁻⁴ mS/cm. The electronic conductivity of the sulfide-based solid electrolyte may specifically be 1.0×10⁻⁹ mS/cm or more, 0.5×10⁻⁸ mS/cm or more, 1.0×10⁻⁸ mS/cm or more, 0.5×10⁻⁷ mS/cm or more, 1.0×10⁻⁷ mS/cm or more, 2.0×10⁻⁷ mS/cm or more, or 3.0×10⁻⁷ mS/cm or more, and may be 7.5×10⁻⁵ mS/cm or less, 8.0×10⁻⁵ mS/cm or less, 8.5×10⁻⁵ mS/cm or less, 9.0×10⁻⁵ mS/cm or less, 9.5×10⁻⁵ mS/cm or less, or 1.0×10⁻⁴ mS/cm or less. In a case in which the electronic conductivity of the sulfide-based solid electrolyte is within the above range, since the solid electrolyte blocks movement of electrons in a solid electrolyte layer and only allows movement of lithium ions, the role of the solid electrolyte may be properly performed.

According to the present invention, the sulfide-based solid electrolyte may have an average particle diameter (D₅₀) of 1.0 µm to 5.0 µm, specifically, 1.0 µm or more, 1.1 µm or more, 1.2 µm or more, 1.3 µm or more, 1.4 µm or more, 1.5 µm or more, 1.6 µm or more, 1.7 µm or more, 1.8 µm or more, 1.9 µm or more, 2.0 µm or more, 2.1 µm or more, 2.2 µm or more, 2.3 µm or more, 2.4 µm or more, or 2.5 µm or more, and 3.5 µm or less, 3.6 µm or less, 3.7 µm or less, 3.8 µm or less, 3.9 µm or less, 4.0 µm or less, 4.1 µm or less, 4.2 µm or less, 4.3 µm or less, 4.4 µm or less, 4.5 µm or less, 4.6 µm or less, 4.7 µm or less, 4.8 µm or less, 4.9 µm or less, or 5.0 µm or less. In a case in which the average particle diameter (D₅₀) of the sulfide-based solid electrolyte is within the above range, a layer may be uniformly formed well when the layer is formed by using the solid electrolyte, and resistance of the layer may also be sufficient to operate an all-solid-state battery.

### All-Solid-State Battery

The present invention provides an all-solid-state battery including the above sulfide-based solid electrolyte.

According to an embodiment of the present invention, the all-solid-state battery includes a positive electrode including a positive electrode active material, a negative electrode including a negative electrode active material, and a solid electrolyte layer including the sulfide-based solid electrolyte which is disposed between the positive electrode and the negative electrode.

Since the all-solid battery according to the present invention has a small decrease in ionic conductivity due to moisture, initial efficiency, life characteristics, and output characteristics of the battery may be excellent.

In this case, the all-solid-state battery of the present invention may be prepared according to a typical method known in the art. For example, the all-solid-state battery of the present invention may be prepared by stacking and pressing such that the solid electrolyte layer exists between the positive electrode and the negative electrode.

### (1) Positive Electrode

The positive electrode may be prepared by coating a positive electrode collector with a slurry for a positive electrode which includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-y}Mn_{yO2} (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1) , etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁) O₂ (where 0<p<1, 0<q<1, 0<r1<1, and p+q+r1=1) or Li(Niₚ₁Co_{q1}Mnᵣ₂) O₄ (where 0<p1<2, 0<q1<2, 0<r2<2, and p1+q1+r2=2), etc.), or lithium-nickel-cobalt-transition metal (M) oxide (e.g., Li (Niₚ₂Co_{q2}Mnᵣ₃M_{S2}) O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}CO_{1/3}) O₂, Li (Ni_{0.6}Mn_{0.2}CO_{0.2}) O₂, Li(Ni_{0.5}Mn_{0.3}CO_{0.2})O₂, Li (Ni_{0.7}Mn_{0.15}Co_{0.15}) O₂, and Li (Ni_{0.8}Mn_{0.1}Co_{0.1}) O₂, etc.), or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li (Ni_{0.6}Mn_{0.2}Co_{0.2}) O₂, Li (Ni_{0.5}Mn_{0.3}Co_{0.2}) O₂, Li (Ni_{0.7}Mn_{0.15}Co_{0.15}) O₂, and Li (Ni_{0.8}Mn_{0.1}Co_{0.1}) O₂, and any one thereof or a mixture of two or more thereof may be used.

The positive electrode active material may be included in an amount of 60 wt% or more, 70 wt% or more, and 80 wt% or more, or 99 wt% or less, and 98 wt% or less based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% or more, 20 wt% or less, 15 wt% or less, and 10 wt% or less based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is 50 wt% or more, 60 wt% or more, 70 wt% or more, 95 wt% or less, 90 wt% or less, and 85 wt% or less.

### (2) Negative Electrode

The negative electrode, for example, may be prepared by coating a slurry for a negative electrode, which includes a negative electrode active material, a binder, a conductive agent, and a solvent, on a negative electrode collector, or a graphite electrode formed of carbon (C) or a lithium metal having a thickness of 50 µm or less itself may be used as the negative electrode.

For example, in a case in which the negative electrode is prepared by coating the slurry for a negative electrode on the negative electrode collector, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO), Si, SiOₓ, metals (Me) such as Sn, Li, Zn, Mg, cadmium (Cd), cerium (Ce), nickel (Ni), or Fe; alloys composed of the metals (Me) ; oxides (MeOₓ) of the metals (Me); and composites of the metals (Me) and carbon. A silicon-based negative electrode active material including silicon (Si), silicon oxide (SiOₓ), or a silicon alloy may specifically be used as the negative electrode active material. In this case, since a thin and stable SEI layer containing a siloxane bond is formed, the high-temperature stability and life characteristics of the battery may be further improved.

The negative electrode active material may be included in an amount of 60 wt% or more, 70 wt% or more, 80 wt% or more, 99 wt% or less, and 98 wt% or less based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% or more, 20 wt% or less, 15 wt% or less, and 10 wt% or less based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% or more, 20 wt% or less, 15 wt% or less, and 10 wt% or less based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is 50 wt% or more, 60 wt% or more, 70 wt% or more, 95 wt% or less, 90 wt% or less, and 85 wt% or less.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Solid Electrolyte Layer

The solid electrolyte layer may further include a binder in addition to the sulfide-based solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be included in an amount of 1 wt% or more, 20 wt% or less, 15 wt% or less, and 10 wt% or less based on a total weight of the solid electrolyte layer.

The present invention provides a battery module including the all-solid-state battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

Li₂S powder, P₂S₅ powder, LiCl powder, and LiBr powder were prepared respectively. The Li₂S powder, the P₂S₅ powder, the LiCl powder, and the LiBr powder were respectively pre-ground using planetary ball mill equipment (FRITSCH GmbH, PULVERISETTE 7 Planetary Micro Mill-Premium line). In this case, after zirconia balls with a diameter of 1 mm and zirconia balls with a diameter of 3 mm were added to a zirconia container of the planetary ball mill equipment at a weight ratio of 1:1 and each powder was added such that a BPR (Ball to Powder Ratio) was 6, the pre-grinding was performed at 550 rpm for 2 hours.

Thereafter, zirconia balls with a diameter of 3 mm and zirconia balls with a diameter of 5 mm were added into a zirconia container of the planetary ball mill equipment (FRITSCH GmbH, PULVERISETTE 7 Planetary Micro Mill-Premium line) at a weight ratio of 1:1, the pre-ground Li₂S powder, P₂S₅ powder, LiCl powder, and LiBr powder were added at a ratio such that a composition of the resulting solid electrolyte was Li_{5.5}PS_{4.5}ClBr_{0.5} and a BPR was 6, xylene was added in an amount of 2.5 wt% based on a total amount of the Li₂S powder, P₂S₅ powder, LiCl powder, and LiBr powder, and a reaction mixture was then prepared by mixing them at 300 rpm for 4 hours.

Thereafter, after the reaction mixture was put in a vacuum oven and vacuum-dried at 80°C for 4 hours, 5 g of the powder was compressed into a form of a pellet at 200 MPa using a mold with a diameter of 25 mm and a press.

Thereafter, the reaction mixture in the form of a pellet was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.5}PS_{4.5}ClBr_{0.5}) . In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Example 2

A sulfide-based solid electrolyte (composition: Li_{5.5}PS_{4.5}ClBr_{0.5}) was prepared in the same manner as in Example 1 except that pre-grinding was performed at a rotation speed of 650 rpm instead of 550 rpm.

### Example 3

A sulfide-based solid electrolyte (composition: Li_{5.5}PS_{4.5}ClBr_{0.5}) was prepared in the same manner as in Example 1 except that xylene was added in an amount of 3.5 wt%, instead of 2.5 wt%, based on the total amount of the Li₂S powder, P₂S₅ powder, LiCl powder, and LiBr powder.

### Example 4

A sulfide-based solid electrolyte (composition: Li_{5.5}PS_{4.5}ClBr_{0.5}) was prepared in the same manner as in Example 1 except that xylene was added in an amount of 6.0 wt%, instead of 2.5 wt%, based on the total amount of the Li₂S powder, P₂S₅ powder, LiCl powder, and LiBr powder.

### Example 5

Li₂S powder, P₂S₅ powder, LiCl powder, LiBr powder, SiS₂ powder, and SnS₂ powder were prepared respectively. The Li₂S powder, the P₂S₅ powder, the LiCl powder, the LiBr powder, the SiS₂ powder, and the SnS₂ powder were respectively pre-ground using planetary ball mill equipment (FRITSCH GmbH, PULVERISETTE 7 Planetary Micro Mill-Premium line). In this case, after zirconia balls with a diameter of 1 mm and zirconia balls with a diameter of 3 mm were added to a zirconia container of the planetary ball mill equipment at a weight ratio of 1:1 and each powder was added such that a BPR was 6, the pre-grinding was performed at 550 rpm for 2 hours.

Thereafter, zirconia balls with a diameter of 3 mm and zirconia balls with a diameter of 5 mm were added into a zirconia container of the planetary ball mill equipment (FRITSCH GmbH, PULVERISETTE 7 Planetary Micro Mill-Premium line) at a weight ratio of 1:1, the pre-ground Li₂S powder, P₂S₅ powder, LiCl powder, LiBr powder, SiS₂ powder, and SnS₂ powder were added at a ratio such that a composition of the resulting solid electrolyte was Li_{5.85}Si_{0.2}Sn_{0.05}P_{0.75}S_{4.6}Cl_{0.4}Br and a BPR was 6, xylene was added in an amount of 2.5 wt% based on a total amount of the Li₂S powder, P₂S₅ powder, LiCl powder, LiBr powder, SiS₂ powder, and SnS₂ powder, and a reaction mixture was then prepared by mixing them at 300 rpm for 4 hours.

Thereafter, after the reaction mixture was put in a vacuum oven and vacuum-dried at 80°C for 4 hours, 5 g of the powder was compressed into a form of a pellet at 100 MPa using a mold with a diameter of 25 mm and a press.

Thereafter, the reaction mixture in the form of a pellet was sintered at 450°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.85}Si_{0.2}Sn_{0.05}P_{0.75}S_{4.6}Cl_{0.4}Br). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Example 6

A sulfide-based solid electrolyte (composition: Li_{5.85}Si_{0.2}Sn_{0.05}P_{0.75}S_{4.6}Cl_{0.4}Br) was prepared in the same manner as in Example 1 except that pre-grinding was performed at a rotation speed of 650 rpm instead of 550 rpm.

### Example 7

A sulfide-based solid electrolyte (composition: Li_{5.85}Si_{0.2}Sn_{0.05}P_{0.75}S_{4.6}Cl_{0.4}Br) was prepared in the same manner as in Example 1 except that xylene was added in an amount of 3.5 wt%, instead of 2.5 wt%, based on the total amount of the Li₂S powder, P₂S₅ powder, LiCl powder, LiBr powder, SiS₂ powder, and SnS₂ powder.

### Example 8

A sulfide-based solid electrolyte (composition: Li_{5.85}Si_{0.2}Sn_{0.05}P_{0.75}S_{4.6}Cl_{0.4}Br) was prepared in the same manner as in Example 1 except that xylene was added in an amount of 6.0 wt%, instead of 2.5 wt%, based on the total amount of the Li₂S powder, P₂S₅ powder, LiCl powder, LiBr powder, SiS₂ powder, and SnS₂ powder.

### Example 9

Li₂S powder, P₂S₅ powder, and LiCl powder were prepared respectively. The Li₂S powder, the P₂S₅ powder, and the LiCl powder were respectively pre-ground using planetary ball mill equipment (FRITSCH GmbH, PULVERISETTE 7 Planetary Micro Mill-Premium line). In this case, after zirconia balls with a diameter of 1 mm and zirconia balls with a diameter of 3 mm were added to a zirconia container of the planetary ball mill equipment at a weight ratio of 1:1 and each powder was added such that a BPR was 6, the pre-grinding was performed at 550 rpm for 2 hours.

Thereafter, zirconia balls with a diameter of 3 mm and zirconia balls with a diameter of 5 mm were added into a zirconia container of the planetary ball mill equipment (FRITSCH GmbH, PULVERISETTE 7 Planetary Micro Mill-Premium line) at a weight ratio of 1:1, the pre-ground Li₂S powder, P₂S₅ powder, and LiCl powder were added at a ratio such that a composition of the resulting solid electrolyte was Li₆PS₅Cl and a BPR was 6, xylene was added in an amount of 2.5 wt% based on a total amount of the Li₂S powder, P₂S₅ powder, and LiCl powder, and a reaction mixture was then prepared by mixing them at 300 rpm for 4 hours.

Thereafter, after the reaction mixture was put in a vacuum oven and vacuum-dried at 80°C for 4 hours, 5 g of the powder was compressed into a form of a pellet at 200 MPa using a mold with a diameter of 25 mm and a press.

Thereafter, the reaction mixture in the form of a pellet was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li₆PS₅Cl). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 1

Li₂S powder, P₂S₅ powder, LiCl powder, and LiBr powder were prepared respectively. Zirconia balls with a diameter of 3 mm were added into a zirconia container of planetary ball mill equipment (FRITSCH GmbH, PULVERISETTE 7 Planetary Micro Mill-Premium line), the Li₂S powder, P₂S₅ powder, LiCl powder, and LiBr powder were added at a ratio such that a composition of the resulting solid electrolyte was Li_{5.5}PS_{4.5}ClBr_{0.5} and a BPR was 6, and a reaction mixture was then prepared by mixing them at 300 rpm for 4 hours.

Thereafter, the reaction mixture was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.5}PS_{4.5}ClBr_{0.5}). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 2

Li₂S powder, P₂S₅ powder, LiCl powder, and LiBr powder were prepared respectively. Zirconia balls with a diameter of 3 mm and zirconia balls with a diameter of 5 mm were added into a zirconia container of planetary ball mill equipment (FRITSCH GmbH, PULVERISETTE 7 Planetary Micro Mill-Premium line) at a weight ratio of 1:1, the Li₂S powder, P₂S₅ powder, LiCl powder, and LiBr powder were added at a ratio such that a composition of the resulting solid electrolyte was Li_{5.5}PS_{4.5}ClBr_{0.5} and a BPR was 6, xylene was added in an amount of 2.5 wt% based on a total amount of the Li₂S powder, P₂S₅ powder, LiCl powder, and LiBr powder, and a reaction mixture was then prepared by mixing them at 300 rpm for 4 hours.

Thereafter, after the reaction mixture was put in a vacuum oven and vacuum-dried at 80°C for 4 hours, 5 g of the powder was compressed into a form of a pellet at 200 MPa using a mold with a diameter of 25 mm and a press.

Thereafter, the reaction mixture in the form of a pellet was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.5}PS_{4.5}ClBr_{0.5}). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 3

Li₂S powder, P₂S₅ powder, LiCl powder, and LiBr powder were prepared respectively. The Li₂S powder, the P₂S₅ powder, the LiCl powder, and the LiBr powder were respectively pre-ground using planetary ball mill equipment (FRITSCH GmbH, PULVERISETTE 7 Planetary Micro Mill-Premium line). In this case, after zirconia balls with a diameter of 1 mm and zirconia balls with a diameter of 3 mm were added to a zirconia container of the planetary ball mill equipment at a weight ratio of 1:1 and each powder was added such that a BPR (Ball to Powder Ratio) was 6, the pre-grinding was performed at 550 rpm for 2 hours.

Thereafter, zirconia balls with a diameter of 3 mm and zirconia balls with a diameter of 5 mm were added into a zirconia container of the planetary ball mill equipment (FRITSCH GmbH, PULVERISETTE 7 Planetary Micro Mill-Premium line) at a weight ratio of 1:1, the pre-ground Li₂S powder, P₂S₅ powder, LiCl powder, and LiBr powder were added at a ratio such that a composition of the resulting solid electrolyte was Li_{5.5}PS_{4.5}ClBr_{0.5} and a BPR was 6, xylene was added in an amount of 2.5 wt% based on a total amount of the Li₂S powder, P₂S₅ powder, LiCl powder, and LiBr powder, and a reaction mixture was then prepared by mixing them at 300 rpm for 4 hours.

Thereafter, the reaction mixture was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.5}PS_{4.5}ClBr_{0.5}). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 4

Li₂S powder, P₂S₅ powder, LiCl powder, LiBr powder, SiS₂ powder, and SnS₂ powder were prepared respectively. Zirconia balls with a diameter of 3 mm were added into a zirconia container of planetary ball mill equipment (FRITSCH GmbH, PULVERISETTE 7 Planetary Micro Mill-Premium line), the Li₂S powder, P₂S₅ powder, LiCl powder, LiBr powder, SiS₂ powder, and SnS₂ powder were added at a ratio such that a composition of the resulting solid electrolyte was Li_{5.85}Si_{0.2}Sn_{0.05}P_{0.75}S_{4.6}Cl_{0.4}Br and a BPR was 6, and a reaction mixture was then prepared by mixing them at 300 rpm for 4 hours.

Thereafter, the reaction mixture was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.85}Si_{0.2}Sn_{0.05}P_{0.75}S_{4.6}Cl_{0.4}Br) In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 5

Li₂S powder, P₂S₅ powder, LiCl powder, LiBr powder, SiS₂ powder, and SnS₂ powder were prepared respectively. Zirconia balls with a diameter of 3 mm and zirconia balls with a diameter of 5 mm were added into a zirconia container of planetary ball mill equipment (FRITSCH GmbH, PULVERISETTE 7 Planetary Micro Mill-Premium line) at a weight ratio of 1:1, the Li₂S powder, P₂S₅ powder, LiCl powder, LiBr powder, SiS₂ powder, and SnS₂ powder were added at a ratio such that a composition of the resulting solid electrolyte was Li_{5.85}Si_{0.2}Sn_{0.05}P_{0.75}S_{4.6}Cl_{0.4}Br and a BPR was 6, xylene was added in an amount of 2.5 wt% based on a total amount of the Li₂S powder, P₂S₅ powder, LiCl powder, LiBr powder, SiS₂ powder, and SnS₂ powder, and a reaction mixture was then prepared by mixing them at 300 rpm for 4 hours.

Thereafter, after the reaction mixture was put in a vacuum oven and vacuum-dried at 80°C for 4 hours, 5 g of the powder was compressed into a form of a pellet at 100 MPa using a mold with a diameter of 25 mm and a press.

Thereafter, the reaction mixture in the form of a pellet was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.5}PS_{4.5}ClBr_{0.5}). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 6

Li₂S powder, P₂S₅ powder, LiCl powder, LiBr powder, SiS₂ powder, and SnS₂ powder were prepared respectively. The Li₂S powder, the P₂S₅ powder, the LiCl powder, the LiBr powder, the SiS₂ powder, and the SnS₂ powder were respectively pre-ground using planetary ball mill equipment (FRITSCH GmbH, PULVERISETTE 7 Planetary Micro Mill-Premium line). In this case, after zirconia balls with a diameter of 1 mm and zirconia balls with a diameter of 3 mm were added to a zirconia container of the planetary ball mill equipment at a weight ratio of 1:1 and each powder was added such that a BPR was 6, the pre-grinding was performed at 550 rpm for 2 hours.

Thereafter, zirconia balls with a diameter of 3 mm and zirconia balls with a diameter of 5 mm were added into a zirconia container of the planetary ball mill equipment (FRITSCH GmbH, PULVERISETTE 7 Planetary Micro Mill-Premium line) at a weight ratio of 1:1, the pre-ground Li₂S powder, P₂S₅ powder, LiCl powder, LiBr powder, SiS₂ powder, and SnS₂ powder were added at a ratio such that a composition of the resulting solid electrolyte was Li_{5.85}Si_{0.2}Sn_{0.05}P_{0.75}S_{4.6}Cl_{0.4}Br and a BPR was 6, xylene was added in an amount of 2.5 wt% based on a total amount of the Li₂S powder, P₂S₅ powder, LiCl powder, LiBr powder, SiS₂ powder, and SnS₂ powder, and a reaction mixture was then prepared by mixing them at 300 rpm for 4 hours.

Thereafter, the reaction mixture was sintered at 450°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li_{5.85}Si_{0.2}Sn_{0.05}P_{0.75}S_{4.6}Cl_{0.4}Br) In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

### Comparative Example 7

Li₂S powder, P₂S₅ powder, and LiCl powder were prepared respectively. Zirconia balls with a diameter of 3 mm were added into a zirconia container of planetary ball mill equipment (FRITSCH GmbH, PULVERISETTE 7 Planetary Micro Mill-Premium line), the Li₂S powder, P₂S₅ powder, and LiCl powder were added at a ratio such that a composition of the resulting solid electrolyte was Li₆PS₅Cl and a BPR was 6, and a reaction mixture was then prepared by mixing them at 300 rpm for 4 hours.

Thereafter, the reaction mixture was sintered at 550°C in an argon gas atmosphere to prepare a sintered product. In addition, the sintered product was ground with an agate mortar and a pestle for 30 minutes, and then ground using the planetary ball mill equipment (FRITSCH GmbH, PULVERISETTE 7 Planetary Micro Mill-Premium line) to prepare a sulfide-based solid electrolyte (composition: Li₆PS₅Cl). In this case, with respect to the above grinding, after zirconia balls with a diameter of 3 mm and zirconia balls with a diameter of 5 mm were added to a zirconia container of the planetary ball mill equipment at a weight ratio of 1:1 and the sintered product subjected to the mortar grinding was added such that a BPR was 6, grinding at 250 rpm for 10 minutes and resting for 20 minutes were set as one cycle, and 20 cycles were repeated.

Table 1 below illustrates the compositions of the solid electrolytes prepared in the examples and the comparative examples, whether or not the raw materials were respectively ground before mixing, and whether or not the reaction mixture was processed into the form of a pellet.

**[Table 1]**

| Category | Composition | Grinding each of the raw materials | Processing into the form of a pellet |
|---|---|---|---|
| Example 1 | Li_{5.5}PS_{4.5}ClBr_{0.5} | ○ | ○ |
| Example 2 | Li_{5.5}PS_{4.5}ClBr_{0.5} | ○ | ○ |
| Example 3 | Li_{5.5}PS_{4.5}ClBr_{0.5} | ○ | ○ |
| Example 4 | Li_{5.5}PS_{4.5}ClBr_{0.5} | ○ | ○ |
| Example 5 | Li_{5.85}Si_{0.2}Sn_{0.05}P_{0.75}S_{4.6}Cl _{0.4}Br | ○ | ○ |
| Example 6 | Li_{5.85}Si_{0.2}Sn_{0.05}P_{0.75}S_{4.6}Cl _{0.4}Br | ○ | ○ |
| Example 7 | Li_{5.85}Si_{0.2}Sn_{0.05}P_{0.75}S_{4.6}Cl _{0.4}Br | ○ | ○ |
| Example 8 | Li_{5.85}Si_{0.2}Sn_{0.05}P_{0.75}S_{4.6}Cl _{0.4}Br | ○ | ○ |
| Example 9 | Li₆PS₅Cl | ○ | ○ |
| Comparative Example 1 | Li_{5.5}PS_{4.5}ClBr_{0.5} | X | X |
| Comparative Example 2 | Li_{5.5}PS_{4.5}ClBr_{0.5} | X | ○ |
| Comparative Example 3 | Li_{5.5}PS_{4.5}ClBr_{0.5} | ○ | X |
| Comparative Example 4 | Li_{5.85}Si_{0.2}Sn_{0.05}P_{0.75}S_{4.6}Cl _{0.4}Br | X | X |
| Comparative Example 5 | Li_{5.85}Si_{0.2}Sn_{0.05}P_{0.75}S_{4.6}Cl _{0.4}Br | X | ○ |
| Comparative Example 6 | Li_{5.85}Si_{0.2}Sn_{0.05}P_{0.75}S_{4.6}Cl _{0.4}Br | ○ | X |
| Comparative Example 7 | Li₆PS₅Cl | X | X |

### Experimental Examples

### Experimental Example 1: Impurity Evaluation

An impurity ratio of the solid electrolyte powder was calculated using X-ray diffraction (XRD) measurement and Rietveld refinement analysis. Bruker's D8 Endeavor with Cu Kα radiation at a wavelength of 1.5406 Å was used as XRD equipment, and a scan rate of 2 Deg/min and a 2 theta angle of 10 to 90 deg under non-atmospheric exposure were used as measurement conditions. Impurities were identified using a TOPAS Rietevld refinement program (Li₂S, LiCl, LiBr, and Li₄SiS₄), and a ratio of the impurities was quantified and presented in Table 2 below.

### Experimental Example 2: Ionic Conductivity Evaluation

150 mg of each of the solid electrolyte powders prepared in the examples and the comparative examples was collected and added into a SUS mold with a diameter of 13 mm. A potentiostat (Biologics, SP-200) was connected to the SUS mold in a state in which the mold was mounted on a press with PEEK for insulation. After an electrolyte structure was sufficiently densified by pressurizing at 370 MPa, AC impedance measurements were performed at a measurement frequency of 0.1 Hz to 7 MHz while the pressure was slowly decreased and maintained at 100 MPa. Ionic conductivity was calculated from measured resistance values through a Nyquist plot, and presented in Table 2 below. All measurements were performed in a drying room at a temperature of 25°C and a relative humidity of 0.7%.

### Experimental Example 3: Electronic Conductivity Evaluation

After 150 mg of each of the solid electrolytes prepared in the examples and the comparative examples was added into a mold with a diameter of Φ 13 mm and pressurized at 370 MPa to form a solid electrolyte layer, a pressure level was decreased to 100 MPa, electronic conductivity was measured by measuring a current value after saturating a current such that there was no change in current by applying 1V DC for 6 hours at room temperature (25°C) using a potentiostat (Biologics, SP-200), and the results thereof are presented in Table 2 below.

### Experimental Example 4

20 mg of each of the solid electrolyte powders prepared in the examples and the comparative examples was dispersed in 5 ml of xylene, and then introduced into a laser diffraction particle size measurement instrument (Mastersizer 3000 by Malvern Panalytical Ltd.) to measure an average particle diameter (D₅₀), and the results thereof are presented in Table 2 below.

**[Table 2]**

| Category | Impur ity conte nt (wt%) | Li₂S (wt%) | LiCl (wt%) | LiBr (wt%) | Li₄SiS 4 (wt%) | Ionic condu ctivi ty (mS/c m) | Electron ic conductivity (mS/cm) | Avera ge particle diame ter (D₅₀) (µm) |
|---|---|---|---|---|---|---|---|---|
| Example 1 | <1 (XRD not detec ted) | 0 | 0 | 0 | - | 6.7 | 3.4×10⁻⁷ | 2.83 |
| Example 2 | <1 (XRD not detec ted) | 0 | 0 | 0 | - | 6.5 | 3.2×10⁻⁷ | 2.88 |
| Example 3 | <1 (XRD not detec ted) | 0 | 0 | 0 | - | 6.5 | 4.3×10⁻⁷ | 2.94 |
| Example 4 | 2 | 0 | 0 | 2 | - | 6.1 | 7.4×10⁻⁵ | 3.02 |
| Example 5 | 2 | 0 | 0 | 2 | 0 | 7.3 | 6.8×10⁻⁷ | 3.02 |
| Example 6 | 3 | 1 | 0 | 2 | 0 | 7.1 | 7.3×10⁻⁷ | 2.88 |
| Example 7 | 2 | 0 | 0 | 2 | 0 | 6.9 | 6.3×10⁻⁷ | 2.94 |
| Example 8 | 2 | 0 | 0 | 2 | 0 | 6.6 | 2.8×10⁻⁵ | 3.02 |
| Example 9 | <1 (XRD not detec ted) | 0 | 0 | - | - | 3.0 | 5.1×10⁻⁷ | 2.89 |
| Comparative Example 1 | 15 | 3 | 8 | 4 | - | 1.6 | 4.1×10⁻⁷ | 3.01 |
| Comparative Example 2 | 5 | 0 | 3 | 2 | - | 4.7 | 3.8×10⁻⁷ | 3.15 |
| Comparative Example 3 | 4 | 1 | 3 | 0 | - | 4.9 | 4.6×10⁻⁷ | 3.15 |
| Comparative Example 4 | 22 | 4 | 4 | 10 | 4 | 0.8 | 8.3×10⁻⁷ | 3.01 |
| Comparative Example 5 | 7 | 2 | 1 | 4 | 0 | 4.2 | 7.6×10⁻⁷ | 3.22 |
| Comparative Example 6 | 6 | 1 | 2 | 3 | 0 | 4.8 | 6.6×10⁻⁷ | 3.13 |
| Comparative Example 7 | 3 | 1 | 2 | - | - | 2.5 | 4.9×10⁻⁷ | 3.22 |

Referring to Table 1 and Table 2, in a case in which, when preparing the sulfide-based solid electrolytes with the same composition, the raw materials were respectively pre-ground and then mixed to prepare a reaction mixture and the reaction mixture was compressed into the form of a pellet and then sintered, it may be confirmed that the impurity content was significantly reduced. Accordingly, it may be confirmed that the ionic conductivity and the electronic conductivity were also improved.

As a result, it may be understood that the method of preparing a sulfide-based solid electrolyte according to the present invention may not only prevent the adhesion of the raw materials, but may also improve the reactivity of the raw materials, and, with respect to the sulfide-based solid electrolyte prepared according to the method of preparing a sulfide-based solid electrolyte according to the present invention, since there were almost no impurities, it may be understood that physical properties, such as ionic conductivity and electronic conductivity, were excellent.

## Claims

1. A method of preparing a sulfide-based solid electrolyte, the method comprising steps of:
(A) preparing a reaction mixture by grinding each of sulfide-based solid electrolyte raw materials and mixing the ground raw materials;
(B) compressing the reaction mixture into a form of a pellet; and
(C) preparing a sintered product by sintering the reaction mixture in the form of a pellet.

2. The method of claim 1, wherein the sulfide-based solid electrolyte raw material comprises (i) a lithium-containing raw material, (ii) a phosphorus-containing raw material, (iii) a sulfur-containing raw material, and optionally (iv) at least one selected from a halogen-containing raw material, an M-containing raw material (M is at least one selected from silicon (Si) and germanium (Ge)), and an N-containing raw material (N is at least one selected from tin (Sn), antimony (Sb), aluminum (Al), gallium (Ga), zinc (Zn), zirconium (Zr), indium (In), and copper (Cu)).

3. The method of claim 1, wherein the grinding of the step (A) is ball mill grinding which is performed using two or more types of balls with different diameters.

4. The method of claim 3, wherein, during the grinding of the step (A), the diameters of the balls are 1 mm, 3 mm, or 5 mm.

5. The method of claim 1, wherein the grinding of the step (A) is performed at a rotation speed of 500 rpm to 800 rpm.

6. The method of claim 1, wherein the mixing of the step (A) is ball mill mixing which is performed using two or more types of balls with different diameters.

7. The method of claim 6, wherein, during the mixing of the step (A), the diameters of the balls are 1 mm, 3 mm, 5 mm, or 10 mm.

8. The method of claim 1, wherein the mixing of the step (A) is performed at a rotation speed of 200 rpm to 500 rpm.

9. The method of claim 2, wherein (iv) the halogen-containing raw material comprises a chlorine-containing raw material and a bromine-containing raw material, and
a ratio of the number of moles of halogen to the total number of moles of phosphorus, M, and N contained in the reaction mixture is in a range of 1.1 to 1.5.

10. The method of claim 1, wherein, during the preparing of the reaction mixture, a non-reactive solvent having a relative polarity to water of 0 to 0.15 is further mixed.

11. The method of claim 10, wherein the non-reactive solvent is mixed in an amount of 2.5 wt% to 5.0 wt% based on a total amount of the sulfide-based solid electrolyte raw materials.

12. The method of claim 1, wherein the compressing of the step (B) is performed at a pressure of 50 MPa to 400 MPa.

13. The method of claim 1, wherein the sintering is performed at a temperature of 350°C to 600°C.

14. The method of claim 1, further comprising a step of (D) grinding the sintered product.

15. The method of claim 14, wherein the grinding of the step (D) comprises mortar grinding the sintered product and ball mill grinding the mortar ground sintered product using two or more types of balls with different diameters.

16. The method of claim 15, wherein, during the grinding of the step (D), the diameters of the balls are 1 mm, 3 mm, 5 mm, or 10 mm.

17. The method of claim 14, wherein the grinding of the step (D) is performed at a rotation speed of 100 rpm to 500 rpm.

18. A sulfide-based solid electrolyte having a composition represented by Formula 1 and
having a total impurity content of 3 wt% or less:
[Formula 1] Li_{7-(x+y)+ ((a×(5-p))+(b×(5-q))}P_{1-(a+b)}MₐN_{b}S_{6-(x+y)}ClₓBr_{y}
wherein, in Formula 1,
M is at least one selected from silicon (Si) and germanium (Ge),
N is at least one selected from tin (Sn), antimony (Sb), aluminum (Al), gallium (Ga), zinc (Zn), zirconium (Zr), indium (In), and copper (Cu),
p is an oxidation number of M, and q is an oxidation number of N, and
0.1≤x≤1.4, 0.1≤y≤1.4, 1.1<x+y≤1.5, 0≤a≤0.5, and 0≤b≤0.2.

19. The sulfide-based solid electrolyte of claim 18, wherein the sulfide-based solid electrolyte has an ionic conductivity of 4.0 mS/cm or more.

20. The sulfide-based solid electrolyte of claim 18, wherein the sulfide-based solid electrolyte has an electronic conductivity of 1.0×10⁻⁹ mS/cm to 1.0×10⁻⁴ mS/cm.

21. The sulfide-based solid electrolyte of claim 18, wherein the sulfide-based solid electrolyte has an average particle diameter (D₅₀) of 1.0 µm to 5.0 µm.
